# EUROPEAN PATENT APPLICATION

(11) **EP 0 888 003 A2**
(43) Date of publication of application: **30.12.1998**
(21) Application number: 98111047.1
(22) Date of filing: 16.06.1998
(51) Int. Cl.: H04N 5/235, H04N 9/73

(54) **Stroboscopic camera apparatus**

(30) Priority: 25.06.1997 JP 169280/97
(71) Applicant: VICTOR COMPANY OF JAPAN, LIMITED, Yokohama-shi, Kanagawa 221-0022 (JP)
(72) Inventor: Ishikawa, Yuichi, Kohoku-ku, Yokohama (JP)
(74) Representative: Morgan, James G.

(57) **Abstract**

This invention relates to a stroboscopic camera apparatus containing a light source. An object of this invention is to implement white balance correction responsive to a variation in color temperature characteristics of the light source. The stroboscopic camera apparatus of this invention includes an image sensor for converting an image of a subject into a corresponding electric signal. A color signal is separated from the electric signal generated by the image sensor. The light source is continuously activated during a variable light emission time. The color signal is corrected in accordance with the light emission time for the light source.

## Description

This invention relates to a stroboscopic camera apparatus such as an electronic stroboscopic still camera apparatus or a stroboscopic video movie camera apparatus.

Examples of stroboscopic camera apparatuses are stroboscopic digital still camera apparatuses and stroboscopic video movie camera apparatuses. In general, color temperature characteristics of stroboscopic lamps depend on a voltage applied thereto and a time interval during which light remains emitted therefrom. Conventional stroboscopic camera apparatuses do not implement white balance correction responsive to a variation in color temperature characteristics of a light source. The absence of the white balance correction tends to cause a deterioration in colors of recorded images of a subject.

It is an object of this invention to provide an improved stroboscopic camera apparatus.

A first aspect of this invention provides a stroboscopic camera apparatus comprising an image sensor for converting an image of a subject into a corresponding electric signal; first means for separating a color signal from the electric signal generated by the image sensor; a light source for emitting light toward the subject; second means for continuously activating the light source during a variable light emission time; and third means for correcting the color signal separated by the first means in accordance with the light emission time used in the second means to implement white balance correction.

A second aspect of this invention is based on the first aspect thereof, and provides a stroboscopic camera apparatus further comprising a light sensor for converting light reflected by the subject into a corresponding electric signal; fourth means for detecting an amount of the light emitted by the light source in response to the electric signal generated by the light sensor; fifth means for comparing the light amount detected by the fourth means with a predetermined reference light amount; and sixth means for varying the light emission time used by the second means in response to a result of the comparison by the fifth means.

A third aspect of this invention is based on the first aspect thereof, and provides a stroboscopic camera apparatus further comprising fourth means for detecting a distance between the apparatus and the subject; fifth means for determining a desired light emission time in response to the distance detected by the fourth means; and sixth means for varying the light emission time used by the second means in accordance with the desired light emission time determined by the fifth means.

A fourth aspect of this invention provides a stroboscopic camera apparatus comprising an image sensor for converting an image of a subject into a corresponding electric signal; first means for separating a color signal from the electric signal generated by the image sensor; a light source for emitting light toward the subject; second means for continuously applying a varying light emission voltage to the light source and continuously activating the light source by the light emission voltage during a variable light emission time; third means for detecting the light emission voltage which occurs at an end of the fight emission time; and fourth means for correcting the color signal separated by the first means in accordance with the light emission voltage detected by the third means to implement white balance correction.

A fifth aspect of this invention is based on the fourth aspect thereof, and provides a stroboscopic camera apparatus further comprising a light sensor for converting light reflected by the subject into a corresponding electric signal; fifth means for detecting an amount of the light emitted by the light source in response to the electric signal generated by the light sensor; sixth means for comparing the light amount detected by the fifth means with a predetermined reference light amount; seventh means for varying the light emission time used by the second means in response to a result of the comparison by the sixth means; and eighth means for detecting the end of the light emission time which is used by the third means in response to the result of the comparison by the sixth means.

A sixth aspect of this invention is based on the fourth aspect thereof, and provides a stroboscopic camera apparatus wherein the third means comprises fifth means for detecting a distance between the apparatus and the subject; sixth means for determining a desired light emission end voltage in response to the distance detected by the fifth means; seventh means for detecting the light emission voltage applied to the light source by the second means; eighth means for comparing the light emission voltage detected by the seventh means with the desired light emission end voltage determined by the sixth means; ninth means for controlling the end of the light emission time in response to a result of the comparison by the eighth means; and tenth means for using the desired light emission end voltage determined by the sixth means as the detected light emission voltage which occurs at the end of the light emission time.

A seventh aspect of this invention provides a stroboscopic camera apparatus comprising an image sensor for converting an image of a subject into a corresponding electric signal; first means for separating a color signal from the electric signal generated by the image sensor; a light source for emitting light toward the subject; second means for continuously applying a varying light emission voltage to the light source and continuously activating the light source by the light emission voltage during a variable light emission time; third means for detecting a distance between the apparatus and the subject; fourth means for determining a desired light emission end voltage in response to the distance detected by the third means; fifth means for detecting the light emission voltage applied to the light source by the second means; sixth means for comparing the light emission voltage detected by the fifth means with the desired light emission end voltage determined by the fourth means; seventh means for controlling an end of the light emission time in response to a result of the comparison by the sixth means; and eighth means for correcting the color signal separated by the first means in accordance with the desired light emission end voltage determined by the fourth means to implement white balance correction.

An eighth aspect of this invention provides a stroboscopic camera apparatus comprising an image sensor for converting an image of a subject into a corresponding electric signal; a color signal processing circuit for separating a color signal from the electric signal generated by the image sensor, and for correcting the separated color signal in response to a first control signal; a sensor for detecting a condition of an exterior of the apparatus; a light source for emitting light toward the subject; a light source drive circuit for generating a drive voltage in response to a second control signal, and applying the generated drive voltage to the light source to drive the light source; and a control circuit for generating the first control signal and and the second control signal in response to an output signal from the sensor, for outputting the first control signal to the color signal processing circuit, and for outputting the second control signal to the light source drive circuit.

Fig. 1 is a block diagram of a stroboscopic camera apparatus according to a first embodiment of this invention.

Fig. 2 is a block diagram of a controller in Fig. 1.

Fig. 3 is a diagram of the relation between a light emission color temperature and a light emission time.

Fig. 4 is a block diagram of a controller in a second embodiment of this invention.

Fig. 5 is a block diagram of the relation between a light emission color temperature and a light emission voltage under different light emitting conditions.

Fig. 6 is a diagram of the relation between a light emission voltage and a light emission time.

Fig. 7 is a block diagram of a stroboscopic camera apparatus according to a third embodiment of this invention.

Fig. 8 is a block diagram of a controller in Fig. 7.

Fig. 9 is a block diagram of a controller in a fourth embodiment of this invention.

### First Embodiment

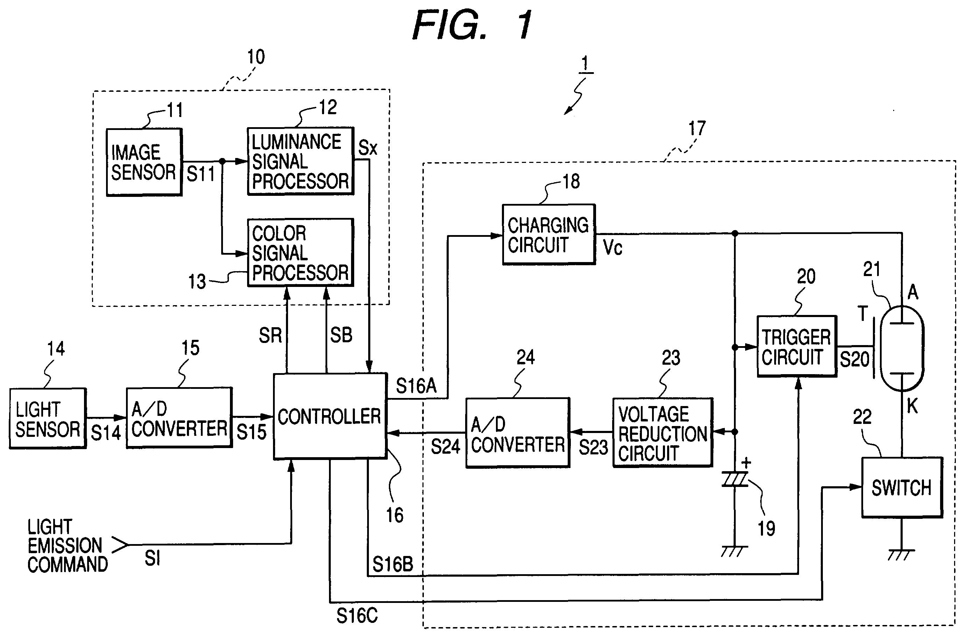

Fig. 1 shows a stroboscopic camera apparatus 1 according to a first embodiment of this invention. As shown in Fig. 1, the stroboscopic camera apparatus 1 includes a camera 10, a light sensor 14, an analog-to-digital (A/D) converter 15, a controller 16, and a stroboscopic light emission device 17.

The light sensor 14 is successively followed by the A/D converter 15 and the controller 16. The controller 16 is connected to the camera 10 and the stroboscopic light emission device 17.

The camera 10 includes a color image sensor 11, a luminance signal processor 12, and a color signal processor 13. The color image sensor 11 includes an array of CCD's (charge coupled devices). The color image sensor 11 is followed by the luminance signal processor 12 and the color signal processor 13. The luminance signal processor 12 and the color signal processor 13 are connected to the controller 16.

The stroboscopic light emission device 17 includes a charging circuit 18, a capacitor 19, a trigger circuit 20, a light source 21, a switch 22, a voltage reduction circuit 23, and an A/D converter 24. The light source 21 uses a xenon lamp having an anode "A", a cathode "K", and a trigger electrode "T".

The input terminal of the charging circuit 18 is connected to the controller 16. The output terminal of the charging circuit 18 is connected to a first end of the capacitor 19. A second end of the capacitor 19 is grounded. The junction between the charging circuit 18 and the capacitor 19 is connected to the anode "A" of the xenon lamp 21, the input terminal of the trigger circuit 20, and the input terminal of the voltage reduction circuit 23. The cathode "K" of the xenon lamp 21 is grounded via the switch 22. The switch 22 has a control terminal connected to the controller 16. The output terminal of the trigger circuit 20 is connected to the trigger electrode "T" of the xenon lamp 21. The trigger circuit 20 has a control terminal connected to the controller 16. The output terminal of the voltage reduction circuit 23 is connected to the input terminal of the A/D converter 24. The output terminal of the A/D converter 24 is connected to the controller 16.

The camera 10 uses, for example, a digital still camera or a video movie camera. The color image sensor 11 in the camera 10 converts incident light into an electric video signal S11. The image sensor 11 outputs the video signal S11 to the luminance signal processor 12 and the color signal processor 13.

The luminance signal processor 12 separates a luminance signal from the video signal S11, and subjects the separated luminance signal to signal processing for signal recording and signal reproduction. The luminance signal processor 12 generates a digital version Sx of the luminance signal. The luminance signal processor 12 outputs the digital luminance signal Sx to the controller 16. The color signal processor 13 separates color signals from the video signal S11, and subjects the separated color signals to signal processing for signal recording and signal reproduction. The color signals includes a primary red signal and a primary blue signal. The color signal processor 13 amplifies the primary red signal and the primary blue signal at controllable gains respectively. The color signal processor 13 controls the amplification gains to implement white balance correction.

A portion of the light emitted from the xenon lamp 21 reaches a subject before being at least partially reflected thereby. The light sensor 14 receives a portion of the light reflected by the subject. The light sensor 14 converts the received light portion into an analog electric signal S14 representing the intensity of the received light portion. The light sensor 14 outputs the analog light intensity signal S14 to the A/D converter 15.

The A/D converter 15 changes the analog light intensity signal S14 into a corresponding digital light intensity signal S15. The A/D converter 15 outputs the digital light intensity signal S15 to the controller 16.

The controller 16 receives, from a suitable device (not shown), a signal SI representing a command to start and implement stroboscopic light emission. The controller 16 receives an output signal S24 of the A/D converter 24 which relates to a voltage reduction. The controller 16 generates a charging control signal S16A, a trigger control signal S16B, a switch control signal S16C, a primary red control signal SR, and a primary blue control signal SB in response to the stroboscopic light emission command signal SI, the light intensity signal S15, the voltage reduction signal S24, and the digital luminance signal Sx. The controller 16 outputs the charging control signal S16A to the charging circuit 18. The controller 16 outputs the trigger control signal S16B to the trigger circuit 20. The controller 16 outputs the switch control signal S16C to the switch 22. The controller 16 outputs the primary red control signal SR and the primary blue control signal SB to the color signal processor 13 within the camera 10.

The charging circuit 18 controls the charging of the capacitor 19 in response to the charging control signal S16A. The capacitor 19 stores charges and generates a light emission voltage Vc while being controlled by the charging circuit 18. The light emission voltage Vc is applied to the anode "A" of the xenon lamp 21, the trigger circuit 20, and the voltage reduction circuit 23.

The trigger circuit 20 generates a trigger pulse signal S20 in response to the trigger control signal S16B and the light emission voltage Vc. The trigger circuit 20 outputs the trigger pulse signal S20 to the trigger electrode "T" of the xenon lamp 21.

The switch 22 is changed between an on state (a conductive state) and an off state (a non-conductive state) in response to the switch control signal S16C. In other words, the switch 22 is closed and opened in response to the switch control signal S16C. Since the switch 22 is connected between the cathode "K" of the xenon lamp 21 and the ground, the switch 22 selectively connects and disconnects the cathode "K" of the xenon lamp 21 to and from the ground in response to the switch control signal S16C. Specifically, the switch 22 connects the cathode "K" of the xenon lamp 21 to the ground when the switch control signal S16C assumes "1". The switch 22 disconnects the cathode "K" of the xenon lamp 21 from the ground when the switch control signal S16C assumes "0".

In the case where the switch 22 connects the cathode "K" of the xenon lamp 21 to the ground, gas within the xenon lamp 21 is ionized when the trigger electrode "T" of the xenon lamp 21 receives an effective pulse of the output signal (the trigger pulse signal) S20 of the trigger circuit 20. The gas ionization starts a discharge between the anode "A" and the cathode "K" of the xenon lamp 21 which is caused by the light emission voltage Vc. In this way, the light emission from the xenon lamp 21 is started and implemented in response to every effective pulse of the trigger pulse signal S20. The xenon lamp 21 stops the light emission when the switch 22 disconnects the cathode "K" of the xenon tube 21 from the ground.

The voltage reduction circuit 23 divides the light emission voltage Vc by a given factor. The voltage reduction circuit 23 outputs the analog division-resultant signal to the A/D converter 24 as the analog voltage reduction signal S23. The level of the analog voltage reduction signal S23 is proportional to the light emission voltage Vc. The voltage reduction circuit 23 includes, for example, a voltage dividing resistor combination.

The A/D converter 24 changes the analog voltage reduction signal S23 into a corresponding digital voltage reduction signal S24. The A/D converter 24 outputs the digital voltage reduction signal S24 to the controller 16. The digital voltage reduction signal S24 represents the light emission voltage Vc.

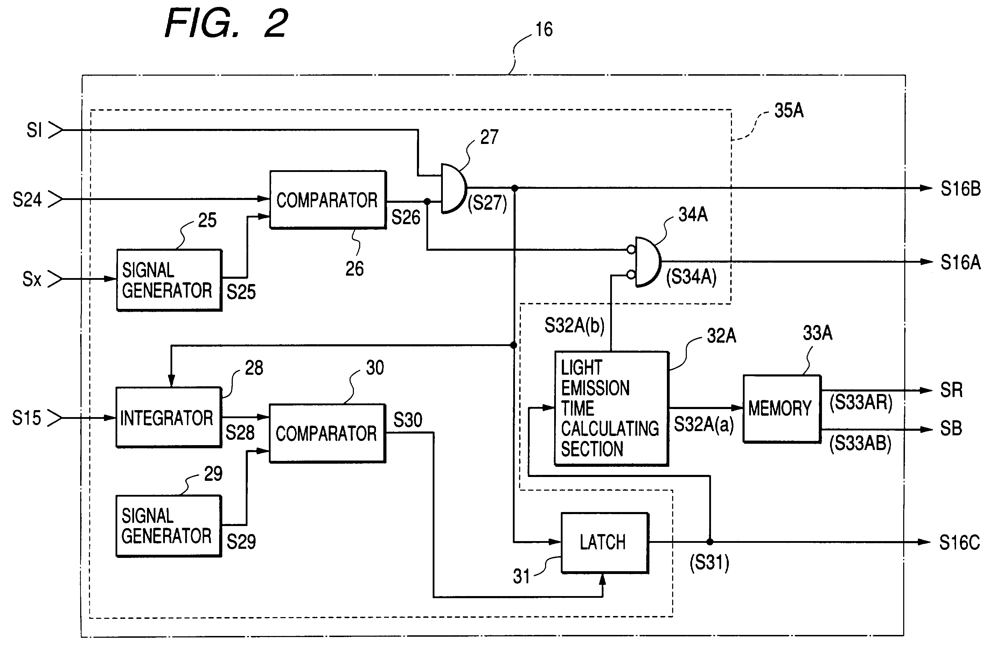

As shown in Fig. 2, the controller 16 includes a light emission controlling section 35A, a light emission time calculating section 32A, and a memory 33A. The light emission controlling section 35A includes a signal generator 25, a comparator 26, an AND gate 27, an integrator 28, a signal generator 29, a comparator 30, a latch 31, and a NOR gate 34A.

The input terminal of the signal generator 25 is connected to the luminance signal processor 12 within the camera 10 (see Fig. 1). The input terminal of the signal generator 25 receives the digital luminance signal Sx from the luminance signal processor 12. The output terminal of the signal generator 25 is connected to a first input terminal of the comparator 26. A second input terminal of the comparator 26 is subjected to the digital voltage reduction signal S24. The output terminal of the comparator 26 is connected to a first input terminal of the AND gate 27 and also a first input terminal of the NOR gate 34A. A second input terminal of the AND gate 27 is subjected to the stroboscopic light emission command signal SI. The output terminal of the AND gate 27 is connected to the control terminal of the trigger device 20 within the stroboscopic light emission device 17 (see Fig. 1). In addition, the output terminal of the AND gate 27 is connected to a control terminal of the integrator 28 and the input terminal of the latch 31. The input terminal of the integrator 28 is subjected to the digital light intensity signal S15. The output terminal of the integrator 28 is connected to a first input terminal of the comparator 30. The output terminal of the signal generator 29 is connected to a second input terminal of the comparator 30. The output terminal of the comparator 30 is connected to a clock terminal of the latch 31. The output terminal of the latch 31 is connected to the control terminal of the switch 22 within the stroboscopic light emission device 17 (see Fig. 1). In addition, the output terminal of the latch 31 is connected to the input terminal of the light emission time calculating section 32A. A first output terminal of the light emission time calculating section 32A is connected to a second input terminal of the NOR gate 34A. The output terminal of the NOR gate 34A is connected to the input terminal of the charging circuit 18 within the stroboscopic light emission device 17 (see Fig. 1). A second output terminal of the light emission time calculating section 32A is connected to the memory 33A. The memory 33A is connected to the color signal processor 13 within the camera 10 (see Fig. 1).

The signal generator 25 produces a digital signal S25 representative of a reference light emission voltage which varies in response to the digital luminance signal Sx. The signal generator 25 includes, for example, a ROM loaded with data representing a predetermined relation of the reference light emission voltage with the luminance level represented by the digital luminance signal Sx. The signal generator 25 outputs the digital signal S25 of the reference light emission voltage to the comparator 26.

The device 26 compares the digital signal S24 of the actual light emission voltage Vc with the digital signal S25 of the reference light emission voltage. When the actual light emission voltage Vc is equal to or higher than the reference light emission voltage, the comparator 26 outputs a "1" signal S26 to the AND gate 27 and the NOR gate 34A. Here, a "1" signal means a signal in a logic state of "1". When the actual light emission voltage Vc is lower than the reference light emission voltage, the comparator 26 outputs a "0" signal S26 to the AND gate 27 and the NOR gate 34A.

In the case where taking a stroboscopic picture is requested, the stroboscopic light emission command signal SI is in a logic state of "1" during a given time interval. During other time intervals, the stroboscopic light emission command signal SI remains in a logic state of "0".

The device 27 implements AND operation between the stroboscopic light emission command signal SI and the output signal S26 of the comparator 26. The AND gate 27 outputs the resultant signal S27 to the integrator 28 and the latch 31. In addition, the AND gate 27 outputs the resultant signal S27 to the trigger device 20 within the stroboscopic light emission device 17 (see Fig. 1) as the trigger control signal S16B.

When the output signal S27 of the AND gate 27 changes from "0" to "1", the integrator 28 starts integrating the value represented by the digital light intensity signal S15. The integrator 28 continues the integration while the output signal S27 of the AND gate 27 remains "1". When the output signal S27 of the AND gate 27 changes from "1" to "0", the integrator 28 stops the integration and returns to an initial state (a reset state). The integrator 28 generates a digital signal S28 representative of the integration result, that is, the amount of light. The integrator 28 outputs the light amount signal S28 to the comparator 30.

The signal generator 29 produces a digital signal S25 representative of a predetermined reference amount (a setting amount) of emitted light. The signal generator 29 outputs the setting light amount signal S29 to the comparator 30.

The device 30 compares the digital signal S28 of the detected light amount (the actual light amount) with the digital signal S29 of the setting light amount. When the detected light amount reaches and exceeds the setting light amount, the comparator 30 outputs a "1" signal S30 to the latch 31. When the detected light amount is smaller than the setting light amount, the comparator 30 outputs a "0" signal S30 to the latch 31.

When the output signal S27 of the AND gate 27 changes from "0" to "1", the latch 31 samples and holds the "1" signal S27. Then, the latch 31 continues to output a signal S31 of "1" until being reset. A change of the output signal S30 of the comparator 30 from "0" to "1" resets the latch 31. The latch 31 outputs a signal S31 of "0" when being reset. The output signal S31 of the latch 31 is applied to the light emission time calculating section 32A. The output signal S31 of the latch 31 is fed to the switch 22 within the stroboscopic light emission device 17 (see Fig. 1) as the switch control signal S16C.

The light emission time calculating section 32A computes the time interval during which the output signal S31 of the latch 31, that is, the switch control signal S16C, remains "1". The light emission time calculating section 32A includes, for example, a counter which is enabled by the "1" switch control signal S16C to count pulses of a high-frequency clock signal. In this case, the number of counted pulses is proportional to the lapse of time. The computed time interval agrees with the time interval during which the xenon lamp 21 continues to emit light. The light emission time calculating section 32A generates a digital signal S32A(a) representing the light emission time (the time interval during which the xenon lamp 21 continues to emit light). The light emission time calculating section 32A outputs the light emission time signal S32A(a) to the memory 33A.

When the computation of the light emission time has been computed, the light emission time calculating section 32A outputs a "0" signal S32A(b) as an indication of a calculation end. The "0" signal S32A(b) lasts for a predetermined time interval. During other time intervals, the light emission time calculating section 32A outputs a "1" signal S32A(b). The output signal S32A(b) of the light emission time calculating section 32A is applied to the NOR gate 34A.

The device 34A implements NOR operation between the output signal S26 of the comparator 26 and the output signal S32A(b) of the light emission time calculating section 32A. The NOR gate 34A outputs the resultant signal S34A to the charging circuit 18 within the stroboscopic light emission device 17 (see Fig. 1) as the charging control signal S16A.

The memory 33A stores a first table of data which represents a predetermined relation of the value represented by the primary red control signal SR with the light emission time represented by the output signal S32A(a) of the calculating section 32A. The first table of data is accessed while the output signal S32A(a) of the calculating section 32A is used as an address signal. A data segment of the primary red control signal SR which is designed by the address signal is read out from the first table of data before being outputted from the memory 33A. The resultant output signal S33AR of the memory 33A is fed to the color signal processor 13 within the camera 10 as the primary red control signal SR. Accordingly, the primary red control signal SR depends on the light emission time (the time interval during which the xenon lamp 21 continues to emit light).

The memory 33A stores a second table of data which represents a predetermined relation of the value represented by the primary blue control signal SB with the light emission time represented by the output signal S32A(a) of the calculating section 32A. The second table of data is accessed while the output signal S32A(a) of the calculating section 32A is used as an address signal. A data segment of the primary blue control signal SB which is designed by the address signal is read out from the second table of data before being outputted from the memory 33A. The resultant output signal S33AB of the memory 33A is fed to the color signal processor 13 within the camera 10 as the primary blue control signal SB. Accordingly, the primary blue control signal SB depends on the light emission time (the time interval during which the xenon lamp 21 continues to emit light).

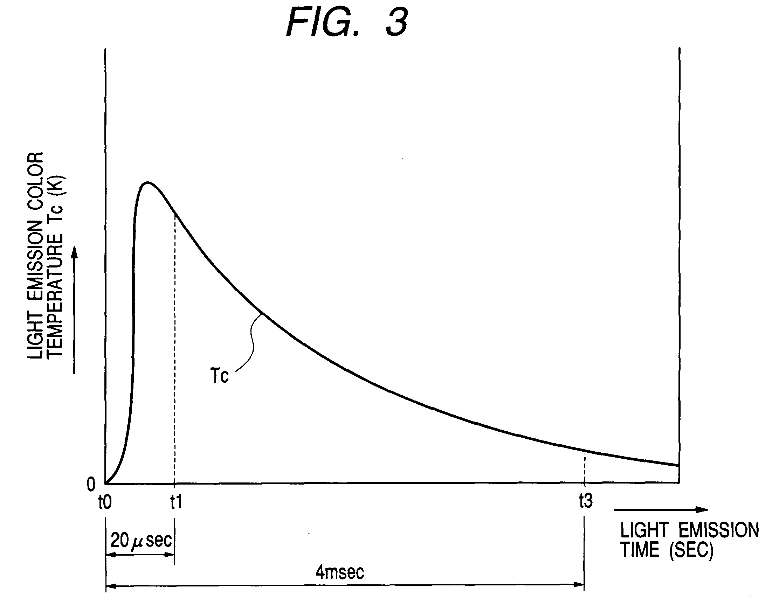

The relation between the light emission time represented by the output signal S32A(a) of the calculating section 32A and the value represented by the primary red control signal SR, and the relation between the light emission time represented by the output signal S32A(a) of the calculating section 32A and the value represented by the primary blue control signal SB are predetermined on the basis of the dependence of a light emission color temperature Tc of the xenon lamp 21 upon the light emission time which is shown in Fig. 3.

With reference to Fig. 3, the light emission color temperature Tc of the xenon lamp 21 abruptly rises and reaches a peak value after the light emission from the xenon lamp 21 starts. Then, the light emission color temperature Tc gradually drops from the peak value in accordance with the light emission time (the lapse of time during which the light continues to be emitted from the xenon lamp 21).

The color signal processor 13 within the camera 10 adjusts the degree (the gain) of the amplification of the primary red signal in response to the primary red control signal SR. Furthermore, the color signal processor 13 adjusts the degree (the gain) of the amplification of the primary blue signal in response to the primary blue control signal SB. Since the primary red control signal SR and the primary blue control signal SB depend on the light emission time, the amplification degrees (the amplification gains) for the primary red signal and the primary blue signal are adjusted in accordance with the light emission time. The light emission color temperature of the xenon lamp 21 varies in accordance with the light emission time (see Fig. 3). The amplification-gain adjustment of the primary red signal and the primary blue signal is designed to implement white balance correction responsive to a variation in the color temperature characteristics of the xenon lamp 21.

### Second Embodiment

A second embodiment of this invention is similar to the embodiment of Figs. 1 and 2 except for design changes explained hereinafter. The second embodiment of this invention includes a controller 16B instead of the controller 16 in Figs. 1 and 2.

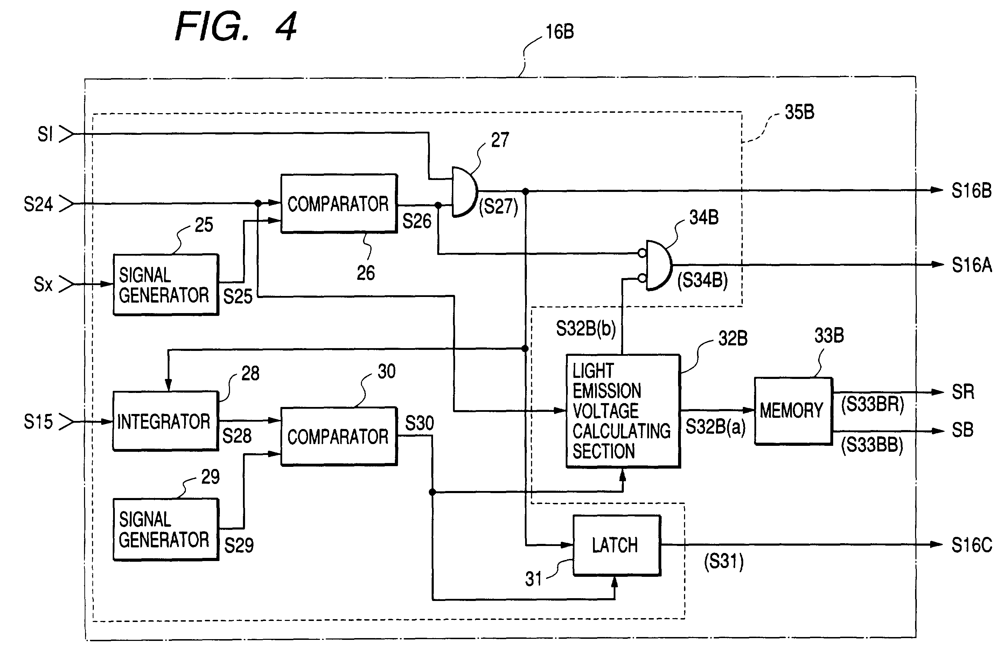

Fig. 4 shows the internal structure of the controller 16B. As shown in Fig. 4, the controller 16B includes a light emission controlling section 35B, a light emission voltage calculating section 32B, and a memory 33B. The light emission controlling section 35B includes a signal generator 25, a comparator 26, an AND gate 27, an integrator 28, a signal generator 29, a comparator 30, a latch 31, and a NOR gate 34B.

The input terminal of the signal generator 25 is connected to the luminance signal processor 12 within the camera 10 (see Fig. 1). The input terminal of the signal generator 25 receives the digital luminance signal Sx from the luminance signal processor 12. The output terminal of the signal generator 25 is connected to a first input terminal of the comparator 26. A second input terminal of the comparator 26 is subjected to the digital voltage reduction signal S24. The output terminal of the comparator 26 is connected to a first input terminal of the AND gate 27 and also a first input terminal of the NOR gate 34B. A second input terminal of the AND gate 27 is subjected to the stroboscopic light emission command signal SI. The output terminal of the AND gate 27 is connected to the control terminal of the trigger device 20 within the stroboscopic light emission device 17 (see Fig. 1). In addition, the output terminal of the AND gate 27 is connected to a control terminal of the integrator 28 and the input terminal of the latch 31. The input terminal of the integrator 28 is subjected to the digital light intensity signal S15. The output terminal of the integrator 28 is connected to a first input terminal of the comparator 30. The output terminal of the signal generator 29 is connected to a second input terminal of the comparator 30. The output signal of the comparator 30 is connected to a clock terminal of the latch 31. In addition, the output terminal of the comparator 30 is connected to a first input terminal of the light emission voltage calculating section 32B. A second input terminal of the light emission voltage calculating section 32B is subjected to the output signal (the voltage reduction signal) S24 of the A/D converter 24 within the stroboscopic light emission device 17 (see Fig. 1). The output terminal of the latch 31 is connected to the control terminal of the switch 22 within the stroboscopic light emission device 17 (see Fig. 1). A first output terminal of the light emission voltage calculating section 32B is connected to a second input terminal of the NOR gate 34B. The output terminal of the NOR gate 34B is connected to the input terminal of the charging circuit 18 within the stroboscopic light emission device 17 (see Fig. 1). A second output terminal of the light emission voltage calculating section 32B is connected to the memory 33B. The memory 33B is connected to the color signal processor 13 within the camera 10 (see Fig. 1).

The signal generator 25 produces a digital signal S25 representative of a reference light emission voltage which varies in response to the digital luminance signal Sx. The signal generator 25 includes, for example, a ROM loaded with data representing a predetermined relation of the reference light emission voltage with the luminance level represented by the digital luminance signal Sx. The signal generator 25 outputs the digital signal S25 of the reference light emission voltage to the comparator 26.

The device 26 compares the digital signal S24 of the actual light emission voltage Vc with the digital signal S25 of the reference light emission voltage. When the actual light emission voltage Vc is equal to or higher than the reference light emission voltage, the comparator 26 outputs a "1" signal S26 to the AND gate 27 and the NOR gate 34B. When the actual light emission voltage Vc is lower than the reference light emission voltage, the comparator 26 outputs a "0" signal S26 to the AND gate 27 and the NOR gate 34B.

In the case where taking a stroboscopic picture is requested, the stroboscopic light emission command signal SI is in a logic state of "1" during a given time interval. During other time intervals, the stroboscopic light emission command signal SI remains in a logic state of "0".

The device 27 implements AND operation between the stroboscopic light emission command signal SI and the output signal S26 of the comparator 26. The AND gate 27 outputs the resultant signal S27 to the integrator 28 and the latch 31. In addition, the AND gate 27 outputs the resultant signal S27 to the trigger device 20 within the stroboscopic light emission device 17 (see Fig. 1) as the trigger control signal S16B.

When the output signal S27 of the AND gate 27 changes from "0" to "1", the integrator 28 starts integrating the value represented by the digital light intensity signal S15. The integrator 28 continues the integration while the output signal S27 of the AND gate 27 remains "1". When the output signal S27 of the AND gate 27 changes from "1" to "0", the integrator 28 stops the integration and returns to an initial state (a reset state). The integrator 28 generates a digital signal S28 representative of the integration result, that is, the amount of light. The integrator 28 outputs the light amount signal S28 to the comparator 30.

The signal generator 29 produces a digital signal S25 representative of a predetermined reference amount (a setting amount) of emitted light. The signal generator 29 outputs the setting light amount signal S29 to the comparator 30.

The device 30 compares the digital signal S28 of the detected light amount (the actual light amount) with the digital signal S29 of the setting light amount. When the detected light amount reaches and exceeds the setting light amount, the comparator 30 outputs a "1" signal S30 to the latch 31 and the light emission voltage calculating section 32B. When the detected light amount is smaller than the setting light amount, the comparator 30 outputs a "0" signal S30 to the latch 31 and the light emission voltage calculating section 32B. Every change of the output signal S30 of the comparator 30 from "0" to "1" determines an end of the light emission from the xenon lamp 21 (see Fig. 1). In other words, every change of the output signal S30 of the comparator 30 from "0" to "1" indicates an end of the light emission from the xenon lamp 21.

When the output signal S27 of the AND gate 27 changes from "0" to "1", the latch 31 samples and holds the "1" signal S27. Then, the latch 31 continues to output a signal S31 of "1" until being reset. A change of the output signal S30 of the comparator 30 from "0" to "1" resets the latch 31. The latch 31 outputs a signal S31 of "0" when being reset. The output signal S31 of the latch 31 is fed to the switch 22 within the stroboscopic light emission device 17 (see Fig. 1) as the switch control signal S16C.

The light emission voltage calculating section 32B computes the light emission voltage Vc applied to the xenon lamp 21 which occurs at the end of the light emission from the xenon lamp 21. Regarding the computation of the light emission end voltage, the light emission voltage calculating section 32B uses the voltage reduction signal S24 as an indication of the light emission voltage Vc applied to the xenon lamp 21. In addition, the light emission voltage calculating section 32B uses a change of the output signal S30 of the comparator 30 from "0" to "1" as an indication of the end of the light emission from the xenon lamp 21. The light emission voltage calculating section 32B generates a digital signal S32B(a) representing the light emission end voltage. The light emission voltage calculating section 32B outputs the light emission end voltage signal S32B(a) to the memory 33B.

When the computation of the light emission end voltage has been computed, the light emission voltage calculating section 32B outputs a "0" signal S32B(b) as an indication of a calculation end. The "0" signal S32B(b) lasts for a predetermined time interval. During other time intervals, the light emission voltage calculating section 32B outputs a "1" signal S32B(b). The output signal S32B(b) of the light emission voltage calculating section 32B is applied to the NOR gate 34B.

The device 34B implements NOR operation between the output signal S26 of the comparator 26 and the output signal S32B(b) of the light emission voltage calculating section 32B. The NOR gate 34B outputs the resultant signal S34B to the charging circuit 18 within the stroboscopic light emission device 17 (see Fig. 1) as the charging control signal S16A.

The memory 33B stores a first table of data which represents a predetermined relation of the value represented by the primary red control signal SR with the light emission end voltage represented by the output signal S32B(a) of the calculating section 32B. The first table of data is accessed while the output signal S32B(a) of the calculating section 32B is used as an address signal. A data segment of the primary red control signal SR which is designed by the address signal is read out from the first table of data before being outputted from the memory 33B. The resultant output signal S33BR of the memory 33B is fed to the color signal processor 13 within the camera 10 (see Fig. 1) as the primary red control signal SR. Accordingly, the primary red control signal SR depends on the light emission end voltage.

The memory 33B stores a second table of data which represents a predetermined relation of the value represented by the primary blue control signal SB with the light emission end voltage represented by the output signal S32B(a) of the calculating section 32B. The second table of data is accessed while the output signal S32B(a) of the calculating section 32B is used as an address signal. A data segment of the primary blue control signal SB which is designed by the address signal is read out from the second table of data before being outputted from the memory 33B. The resultant output signal S33BB of the memory 33B is fed to the color signal processor 13 within the camera 10 (see Fig. 1) as the primary blue control signal SB. Accordingly, the primary blue control signal SB depends on the light emission end voltage.

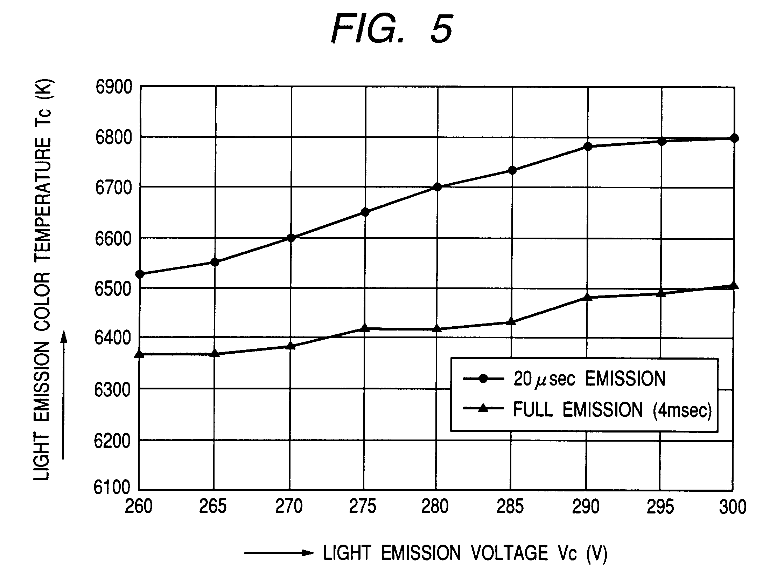

The relation between the light emission end voltage represented by the output signal S32B(a) of the calculating section 32B and the value represented by the primary red control signal SR, and the relation between the light emission end voltage represented by the output signal S32B(a) of the calculating section 32B and the value represented by the primary blue control signal SB are predetermined on the basis of the dependence of a light emission color temperature Tc of the xenon lamp 21 upon the light emission voltage Vc which is shown in Fig. 5.

The color signal processor 13 within the camera 10 (see Fig. 1) adjusts the degree (the gain) of the amplification of the primary red signal in response to the primary red control signal SR. Furthermore, the color signal processor 13 adjusts the degree (the gain) of the amplification of the primary blue signal in response to the primary blue control signal SB. Since the primary red control signal SR and the primary blue control signal SB depend on the light emission end voltage, the amplification degrees (the amplification gains) for the primary red signal and the primary blue signal are adjusted in accordance with the light emission end voltage. The light emission color temperature of the xenon lamp 21 varies in accordance with the light emission voltage Vc (see Fig. 5). The amplification-gain adjustment of the primary red signal and the primary blue signal is designed to implement white balance correction responsive to a variation in the color temperature characteristics of the xenon lamp 21.

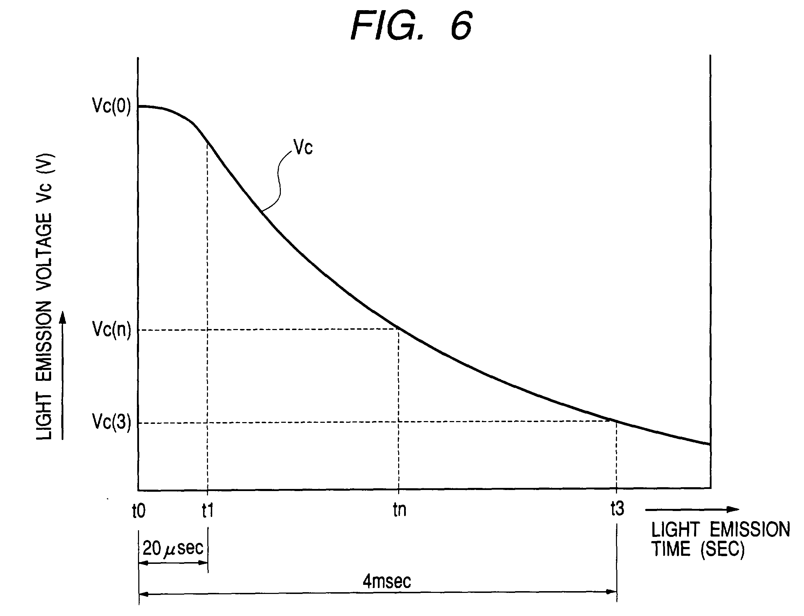

With reference to Fig. 6, the light emission voltage Vc, that is, the voltage applied to the xenon lamp 21 from the capacitor 19 (see Fig. 1), drops as the light emission time increases.

Experiments were carried out as follows. The xenon lamp 21 (see Fig. 1) was of the "D-2312" type. The capacitor 19 (see Fig. 1) had a capacitance of 50 µF. The capacitor 19 was charged to a voltage of 260 V which corresponded to a light emission voltage Vc. Then, the xenon lamp 21 (see Fig. 1) was activated to emit light therefrom. A measurement was made as to a mean light emission color temperature Tc during a light emission time of 20 µsec. In addition, a measurement was made as to a mean light emission color temperature Tc during a light emission time of 4 msec. Similar steps were iterated while the charged voltage (the light emission voltage Vc) was changed from 260 V to 300 V at intervals of 5 V. The measured mean light emission color temperatures Tc are plotted in Fig. 5. It is shown in Fig. 5 that the light emission color temperature Tc of the xenon lamp 21 gradually rises as the light emission voltage Vc increases.

### Third Embodiment

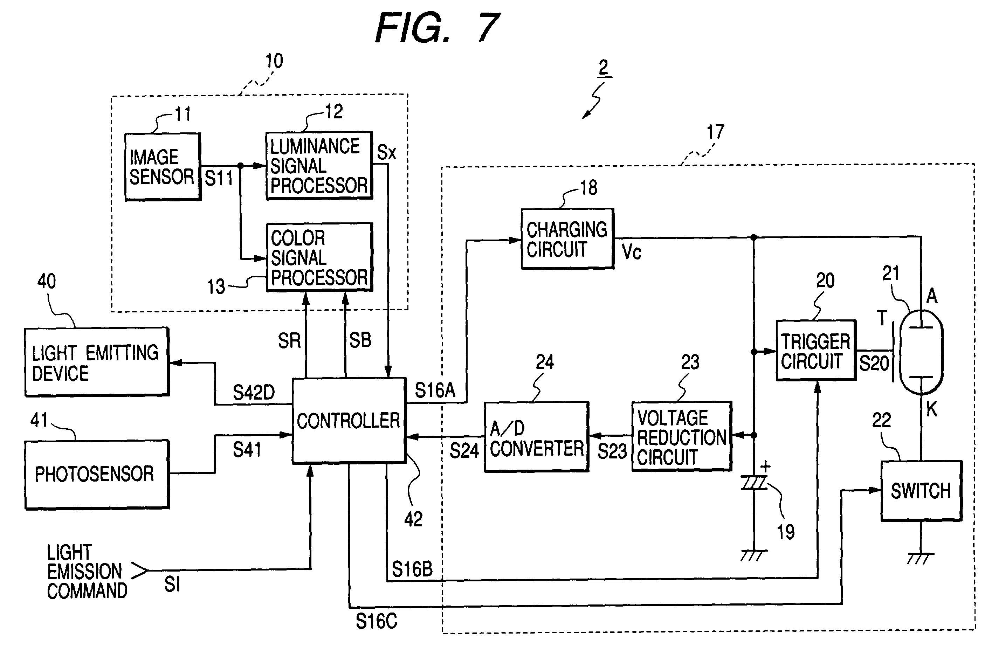

Fig. 7 shows a stroboscopic camera apparatus 2 according to a third embodiment of this invention. The stroboscopic camera apparatus 2 in Fig. 7 is similar to the stroboscopic camera apparatus 1 in Fig. 1 except for design changes explained hereinafter.

The stroboscopic camera apparatus 2 in Fig. 7 includes a controller 42 instead of the controller 16 (see Fig. 1). The stroboscopic camera apparatus 2 includes a light emitting device 40 and a photosensor 41. The light emitting device 40 uses, for example, an infrared light emitting diode. The photosensor 41 uses, for example, a pin photodiode. The light emitting device 40 and the photosensor 41 are connected to the controller 42.

The controller 42 outputs a control signal S42D to the light emitting device 40. The light emitting device 40 emits an infrared light beam toward a subject in response to the control signal S42D. A portion of the emitted light beam reaches the subject, being reflected thereby. A portion of the reflected light beam reaches the photosensor 41. The photosensor 41 converts the incident light beam into a corresponding electric signal S41. The photosensor 41 outputs the electric signal S41 to the controller 42. The controller 42 calculates the distance between the stroboscopic camera apparatus 2 and the subject on the basis of the control signal S42D and the output signal S41 of the photosensor 41.

The controller 42 receives a digital luminance signal Sx from a luminance signal processor 12 within a camera 10. The controller 42 receives, from a suitable device (not shown), a signal SI representing a command to implement stroboscopic light emission. The controller 42 receives an output signal S24 of the A/D converter 24 which relates to a voltage reduction, and which indicates a light emission voltage Vc. The controller 42 generates a charging control signal S16A, a trigger control signal S16B, a switch control signal S16C, a primary red control signal SR, a primary blue control signal SB, and the previously-mentioned control signal S42D in response to the stroboscopic light emission command signal SI, the output signal S41 of the photosensor 41, the voltage reduction signal S24, and the digital luminance signal Sx. The controller 42 outputs the charging control signal S16A to the charging circuit 18. The controller 42 outputs the trigger control signal S16B to the trigger circuit 20. The controller 42 outputs the switch control signal S16C to the switch 22. The controller 42 outputs the primary red control signal SR and the primary blue control signal SB to the color signal processor 13 within the camera 10. The controller 42 outputs the control signal S42D to the light emitting device 40.

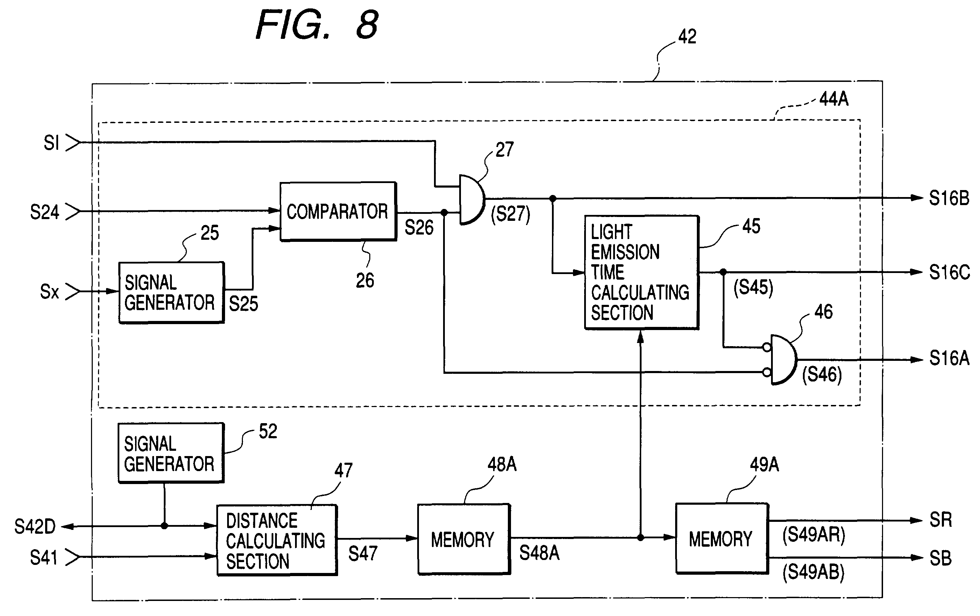

As shown in Fig. 8, the controller 42 includes a light emission controlling section 44A, a distance calculating section 47, memories 48A and 49A, and a signal generator 52. The light emission controlling section 44A includes a signal generator 25, a comparator 26, an AND gate 27, a light emission time calculating section 45, and a NOR gate 46.

The input terminal of the signal generator 25 receives the digital luminance signal Sx from the luminance signal processor 12 within the camera 10 (see Fig. 7). The output terminal of the signal generator 25 is connected to a first input terminal of the comparator 26. A second input terminal of the comparator 26 is subjected to the digital voltage reduction signal S24. The output terminal of the comparator 26 is connected to a first input terminal of the AND gate 27 and also a first input terminal of the NOR gate 46. A second input terminal of the AND gate 27 is subjected to the stroboscopic light emission command signal SI. The output terminal of the AND gate 27 is connected to the control terminal of the trigger device 20 within the stroboscopic light emission device 17 (see Fig. 7). In addition, the output terminal of the AND gate 27 is connected to a first input terminal of the light emission time calculating section 45. A second input terminal of the light emission time calculating section 45 is connected to the data output terminal of the memory 48A. The output terminal of the light emission time calculating section 45 is connected to a second input terminal of the NOR gate 46. In addition, the output terminal of the light emission calculating section 45 is connected to the control terminal of the switch 22 within the stroboscopic light emission device 17 (see Fig. 7). The output terminal of the NOR gate 46 is connected to the input terminal of the charging circuit 18 within the stroboscopic light emission device 17 (see Fig. 7).

The output terminal of the signal generator 52 is connected to the light emitting device 40 (see Fig. 7). In addition, the output terminal of the signal generator 52 is connected to a first input terminal of the distance calculating section 47. A second input terminal of the distance calculating section 47 receives the output signal S41 of the photosensor 41. The output terminal of the distance calculating section 47 is connected to the address input terminal of the memory 48A. The data output terminal of the memory 48A is connected to the address input terminal of the memory 49A. The memory 49A has two data output terminals connected to the color signal processor 13 within the camera 10 (see Fig. 7).

The signal generator 52 produces the control signal S42D in response to a signal of a command to implement distance measurement. The signal generator 52 outputs the control signal S42D to the light emitting device 40 and the distance calculating section 47. Specifically, the signal generator 52 changes the control signal S42D to its active state when the distance measurement command signal changes from "0" to "1".

The light emitting device 40 emits a pulse of a beam of infrared light toward a subject in response to the active control signal S42D. A portion of the emitted light beam pulse reaches the subject, being reflected thereby. A portion of the reflected light beam pulse reaches the photosensor 41. The photosensor 41 converts the incident light beam pulse into a corresponding electric signal S41. The photosensor 41 outputs the electric signal S41 to the distance calculating section 47 within the controller 42.

The distance calculating section 47 detects the moment of light emission from the light emitting device 40 on the basis of the control signal S42D outputted from the signal generator 52. The distance calculating section 47 detects the moment of light reception by the photosensor 41 on the basis of the output signal S41 of the photosensor 41. The distance calculating section 47 computes the distance between the stroboscopic camera apparatus 2 and the subject according to the detected moment of light emission and the detected moment of light reception. The distance calculating section 47 generates a digital signal S47 representing the computed distance. The distance calculating section 47 outputs the distance signal S47 to the memory 48A.

The memory 48A stores a table of data which represents a predetermined relation of a desired light emission time with the distance represented by the output signal S47 of the distance calculating section 47. The table of data is accessed while the output signal S47 of the distance calculating section 47 is used as an address signal. A data segment of the desired light emission time which is designed by the address signal is read out from the table of data before being outputted from the memory 48A. The resultant output signal S48A of the memory 48A is fed to the emission time calculating section 45 and the memory 49A.

The memory 49A stores a first table of data which represents a predetermined relation of the value represented by the primary red control signal SR with the desired light emission time represented by the output signal S48A of the memory 48A. The first table of data is accessed while the output signal S48A of the memory 48A is used as an address signal. A data segment of the primary red control signal SR which is designed by the address signal is read out from the first table of data before being outputted from the memory 49A. The resultant output signal S49AR of the memory 49A is fed to the color signal processor 13 within the camera 10 as the primary red control signal SR. Accordingly, the primary red control signal SR depends on the desired light emission time (the desired time interval during which the xenon lamp 21 should continue to emit light).

The memory 49A stores a second table of data which represents a predetermined relation of the value represented by the primary blue control signal SB with the desired light emission time represented by the output signal S48A of the memory 48A. The second table of data is accessed while the output signal S48A of the memory 48A is used as an address signal. A data segment of the primary blue control signal SB which is designed by the address signal is read out from the second table of data before being outputted from the memory 49A. The resultant output signal S49AB of the memory 49A is fed to the color signal processor 13 within the camera 10 as the primary blue control signal SB. Accordingly, the primary blue control signal SB depends on the desired light emission time (the desired time interval during which the xenon lamp 21 should continue to emit light).

The relation between the desired light emission time represented by the output signal S48A of the memory 48A and the value represented by the primary red control signal SR, and the relation between the desired light emission time represented by the output signal S48A of the memory 48A and the value represented by the primary blue control signal SB are predetermined on the basis of the dependence of a light emission color temperature Tc of the xenon lamp 21 upon an actual light emission time.

The signal generator 25 produces a digital signal S25 representative of a reference light emission voltage which varies in response to the digital luminance signal Sx. The signal generator 25 includes, for example, a ROM loaded with data representing a predetermined relation of the reference light emission voltage with the luminance level represented by the digital luminance signal Sx. The signal generator 25 outputs the digital signal S25 of the reference light emission voltage to the comparator 26.

The device 26 compares the digital signal S24 of the actual light emission voltage Vc with the digital signal S25 of the reference light emission voltage. When the actual light emission voltage Vc is equal to or higher than the reference light emission voltage, the comparator 26 outputs a "1" signal to the AND gate 27 and the NOR gate 46. When the actual light emission voltage Vc is lower than the reference light emission voltage, the comparator 26 outputs a "0" signal to the AND gate 27 and the NOR gate 46.

In the case where taking a stroboscopic picture is requested, the stroboscopic light emission command signal SI is in a logic state of "1" during a given time interval. During other time intervals, the stroboscopic light emission command signal SI remains in a logic state of "0".

The device 27 implements AND operation between the stroboscopic light emission command signal SI and the output signal S26 of the comparator 26. The AND gate 27 outputs the resultant signal S27 to the light emission time calculating section 45. In addition, the AND gate 27 outputs the resultant signal S27 to the trigger device 20 within the stroboscopic light emission device 17 (see Fig. 7) as the trigger control signal S16B.

The light emission time calculating section 45 includes a flip-flop circuit which is set by a change of the output signal S27 of the AND gate 27 from "0" to "1". The light emission time calculating section 45 measures the lapse of time since the moment of the setting of the flip-flop circuit. The light emission time calculating section 45 compares the measured lapse of time with the desired light emission time represented by the output signal S48A of the memory 48A. When the measured lapse of time reaches the desired light emission time, the light emission time calculating section 45 resets the flip-flop circuit. The output signal of the flip-flop circuit is used as an output signal S45 of the light emission time calculating section 45. The output signal S45 of the light emission time calculating section 45 changes from "0" to "1" when the output signal S27 of the AND gate 27 changes from "0" to "1". During the time interval equal to the desired light emission time, the output signal S45 of the light emission time calculating section 45 continues to be "1". When the time interval equal to the desired light emission time has elapsed, the output signal S45 of the light emission time calculating section 45 returns to "0". The output signal S45 of the light emission time calculating section 45 is fed to the switch 22 within the stroboscopic light emission device 17 (see Fig. 7) as the switch control signal S16C. Accordingly, the actual time interval during which the xenon lamp 21 remains activated to emit light is equal to the desired light emission time represented by the output signal S48A of the memory 48A. Also, the output signal S45 of the light emission time calculating section 45 is fed to the NOR gate 46.

The device 46 implements NOR operation between the output signal S26 of the comparator 26 and the output signal S45 of the light emission time calculating section 45. The NOR gate 46 outputs the resultant signal S46 to the charging circuit 18 within the stroboscopic light emission device 17 (see Fig. 7) as the charging control signal S16A.

The color signal processor 13 within the camera 10 adjusts the degree (the gain) of the amplification of the primary red signal in response to the primary red control signal SR. Furthermore, the color signal processor 13 adjusts the degree (the gain) of the amplification of the primary blue signal in response to the primary blue control signal SB. Since the primary red control signal SR and the primary blue control signal SB depend on the desired light emission time, the amplification degrees (the amplification gains) for the primary red signal and the primary blue signal are adjusted in accordance with the desired light emission time. The light emission color temperature of the xenon lamp 21 varies in accordance with the actual light emission time (see Fig. 3). The amplification-gain adjustment of the primary red signal and the primary blue signal is designed to implement white balance correction responsive to a variation in the color temperature characteristics of the xenon lamp 21.

### Fourth Embodiment

A fourth embodiment of this invention is similar to the embodiment of Figs. 7 and 8 except for design changes explained hereinafter. The fourth embodiment of this invention includes a controller 42B instead of the controller 42 in Fig. 8.

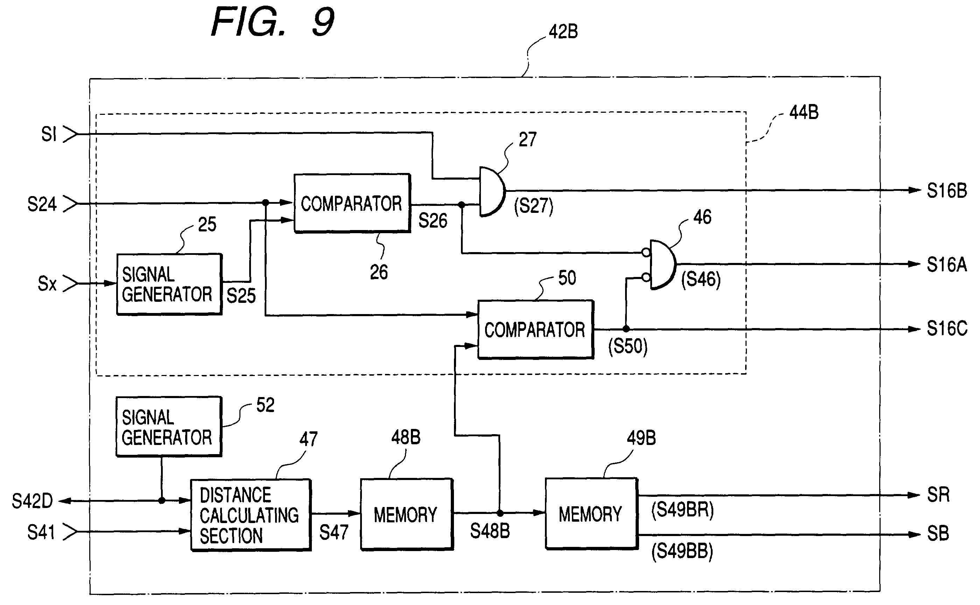

Fig. 9 shows the internal structure of the controller 42B. As shown in Fig. 9, the controller 42B includes a light emission controlling section 44B, a distance calculating section 47, memories 48B and 49B, and a signal generator 52. The light emission controlling section 44B includes a signal generator 25, a comparator 26, an AND gate 27, a comparator 50, and a NOR gate 46.

The input terminal of the signal generator 25 receives the digital luminance signal Sx from the luminance signal processor 13 within the camera 10 (see Fig. 7). The output terminal of the signal generator 25 is connected to a first input terminal of the comparator 26. A second input terminal of the comparator 26 is subjected to the digital voltage reduction signal S24. The output terminal of the comparator 26 is connected to a first input terminal of the AND gate 27 and also a first input terminal of the NOR gate 46. A second input terminal of the AND gate 27 is subjected to the stroboscopic light emission command signal SI. The output terminal of the AND gate 27 is connected to the control terminal of the trigger device 20 within the stroboscopic light emission device 17 (see Fig. 7). A first input terminal of the comparator 50 is subjected to the digital voltage reduction signal S24. A second input terminal of the comparator 50 is connected to the data output terminal of the memory 48B. The output terminal of the comparator 50 is connected to a second input terminal of the NOR gate 46. In addition, the output terminal of the comparator 50 is connected to the control terminal of the switch 22 within the stroboscopic light emission device 17 (see Fig. 7). The output terminal of the NOR gate 46 is connected to the input terminal of the charging circuit 18 within the stroboscopic light emission device 17 (see Fig. 7).

The output terminal of the signal generator 52 is connected to the light emitting device 40 (see Fig. 7). In addition, the output terminal of the signal generator 52 is connected to a first input terminal of the distance calculating section 47. A second input terminal of the distance calculating section 47 receives the output signal S41 of the photosensor 41. The output terminal of the distance calculating section 47 is connected to the address input terminal of the memory 48B. The data output terminal of the memory 48B is connected to the address input terminal of the memory 49B. The memory 49B has two data output terminals connected to the color signal processor 13 within the camera 10 (see Fig. 7).

The signal generator 52 produces the control signal S42D in response to a signal of a command to implement distance measurement. The signal generator 52 outputs the control signal S42D to the light emitting device 40 and the distance calculating section 47. Specifically, the signal generator 52 changes the control signal S42D to its active state when the distance measurement command signal changes from "0" to "1".

The light emitting device 40 emits a pulse of a beam of infrared light toward a subject in response to the active control signal S42D. A portion of the emitted light beam pulse reaches the subject, being reflected thereby. A portion of the reflected light beam pulse reaches the photosensor 41. The photosensor 41 converts the incident light beam pulse into a corresponding electric signal S41. The photosensor 41 outputs the electric signal S41 to the distance calculating section 47 within the controller 42B.

The distance calculating section 47 detects the moment of light emission from the light emitting device 40 on the basis of the control signal S42D outputted from the signal generator 52. The distance calculating section 47 detects the moment of light reception by the photosensor 41 on the basis of the output signal S41 of the photosensor 41. The distance calculating section 47 computes the distance between the stroboscopic camera apparatus 2 and the subject according to the detected moment of light emission and the detected moment of light reception. The distance calculating section 47 generates a digital signal S47 representing the computed distance. The distance calculating section 47 outputs the distance signal S47 to the memory 48B.

The memory 48B stores a table of data which represents a predetermined relation of a desired light emission end voltage with the distance represented by the output signal S47 of the distance calculating section 47. The table of data is accessed while the output signal S47 of the distance calculating section 47 is used as an address signal. A data segment of the desired light emission end voltage which is designed by the address signal is read out from the table of data before being outputted from the memory 48B. The resultant output signal S48B of the memory 48B is fed to the comparator 50 and the memory 49B.

The memory 49B stores a first table of data which represents a predetermined relation of the value represented by the primary red control signal SR with the desired light emission end voltage represented by the output signal S48B of the memory 48B. The first table of data is accessed while the output signal S48B of the memory 48B is used as an address signal. A data segment of the primary red control signal SR which is designed by the address signal is read out from the first table of data before being outputted from the memory 49B. The resultant output signal S49BR of the memory 49B is fed to the color signal processor 13 within the camera 10 as the primary red control signal SR. Accordingly, the primary red control signal SR depends on the desired light emission end voltage (the desired light emission voltage applied to the xenon lamp 21 which should occur at the end of the light emission therefrom).

The memory 49B stores a second table of data which represents a predetermined relation of the value represented by the primary blue control signal SB with the desired light emission end voltage represented by the output signal S48B of the memory 48B. The second table of data is accessed while the output signal S48B of the memory 48B is used as an address signal. A data segment of the primary blue control signal SB which is designed by the address signal is read out from the second table of data before being outputted from the memory 49B. The resultant output signal S49BB of the memory 49B is fed to the color signal processor 13 within the camera 10 as the primary blue control signal SB. Accordingly, the primary blue control signal SB depends on the desired light emission end voltage (the desired light emission voltage applied to the xenon lamp 21 which should occur at the end of the light emission therefrom).

The relation between the desired light emission end voltage represented by the output signal S48B of the memory 48B and the value represented by the primary red control signal SR, and the relation between the desired light emission end voltage represented by the output signal S48B of the memory 48B and the value represented by the primary blue control signal SB are predetermined on the basis of the dependence of a light emission color temperature Tc of the xenon lamp 21 upon an actual light emission voltage (an actual light emission voltage applied to the xenon lamp 21 to implement light emission therefrom).

The signal generator 25 produces a digital signal S25 representative of a reference light emission voltage which varies in response to the digital luminance signal Sx. The signal generator 25 includes, for example, a ROM loaded with data representing a predetermined relation of the reference light emission voltage with the luminance level represented by the digital luminance signal Sx. The signal generator 25 outputs the digital signal S25 of the reference light emission voltage to the comparator 26.

The device 26 compares the digital signal S24 of the actual light emission voltage Vc with the digital signal S25 of the reference light emission voltage. When the actual light emission voltage Vc is equal to or higher than the reference light emission voltage, the comparator 26 outputs a "1" signal S26 to the AND gate 27 and the NOR gate 46. When the actual light emission voltage Vc is lower than the reference light emission voltage, the comparator 26 outputs a "0" signal S26 to the AND gate 27 and the NOR gate 46.

In the case where taking a stroboscopic picture is requested, the stroboscopic light emission command signal SI is in a logic state of "1" during a given time interval. During other time intervals, the stroboscopic light emission command signal SI remains in a logic state of "0".

The device 27 implements AND operation between the stroboscopic light emission command signal SI and the output signal S26 of the comparator 26. The AND gate 27 outputs the resultant signal S27 to the trigger device 20 within the stroboscopic light emission device 17 (see Fig. 7) as the trigger control signal S16B.

The comparator 50 compares the digital signal S24 of the actual light emission voltage Vc with the output signal S48B of the memory 48B which represents the desired light emission end voltage. When the actual light emission voltage Vc is higher than the desired light emission end voltage, the comparator 50 outputs a "1" signal S50. When the actual light emission voltage Vc is equal to or lower than the desired light emission end voltage, the comparator 50 outputs a "0" signal S50. The output signal S50 of the comparator 50 is fed to the switch 22 within the stroboscopic light emission device 17 (see Fig. 7) as the switch control signal S16C. Accordingly, the xenon lamp 21 continues to be activated to emit light during the time interval for which the actual light emission voltage Vc remains higher than the desired light emission end voltage. The light emission from the xenon lamp 21 is terminated when the actual light emission voltage Vc drops to the desired light emission end voltage. Also, the output signal S50 of the comparator 50 is fed to the NOR gate 46.

The NOR gate 46 implements NOR operation between the output signal S26 of the comparator 26 and the output signal S50 of the comparator 50. The NOR gate 46 outputs the resultant signal S46 to the charging circuit 18 within the stroboscopic light emission device 17 (see Fig. 7) as the charging control signal S16A.

The color signal processor 13 within the camera 10 adjusts the degree (the gain) of the amplification of the primary red signal in response to the primary red control signal SR. Furthermore, the color signal processor 13 adjusts the degree (the gain) of the amplification of the primary blue signal in response to the primary blue control signal SB. Since the primary red control signal SR and the primary blue control signal SB depend on the desired light emission end voltage, the amplification degrees (the amplification gains) for the primary red signal and the primary blue signal are adjusted in accordance with the desired light emission end voltage. The light emission color temperature of the xenon lamp 21 varies in accordance with the actual light emission end voltage. The amplification-gain adjustment of the primary red signal and the primary blue signal is designed to implement white balance correction responsive to a variation in the color temperature characteristics of the xenon lamp 21.

## Claims

1. A stroboscopic camera apparatus comprising:
an image sensor for converting an image of a subject into a corresponding electric signal;
first means for separating a color signal from the electric signal generated by the image sensor;
a light source for emitting light toward the subject;
second means for continuously activating the light source during a variable light emission time; and
third means for correcting the color signal separated by the first means in accordance with the light emission time used in the second means to implement white balance correction.

2. A stroboscopic camera apparatus as recited in claim 1, further comprising:
a light sensor for converting light reflected by the subject into a corresponding electric signal;
fourth means for detecting an amount of the light emitted by the light source in response to the electric signal generated by the light sensor;
fifth means for comparing the light amount detected by the fourth means with a predetermined reference light amount; and
sixth means for varying the light emission time used by the second means in response to a result of the comparison by the fifth means.

3. A stroboscopic camera apparatus as recited in claim 1, further comprising:
fourth means for detecting a distance between the apparatus and the subject;
fifth means for determining a desired light emission time in response to the distance detected by the fourth means; and
sixth means for varying the light emission time used by the second means in accordance with the desired light emission time determined by the fifth means.

4. A stroboscopic camera apparatus comprising:
an image sensor for converting an image of a subject into a corresponding electric signal;
first means for separating a color signal from the electric signal generated by the image sensor;
a light source for emitting light toward the subject;
second means for continuously applying a varying light emission voltage to the light source and continuously activating the light source by the light emission voltage during a variable light emission time;
third means for detecting the light emission voltage which occurs at an end of the light emission time; and
fourth means for correcting the color signal separated by the first means in accordance with the light emission voltage detected by the third means to implement white balance correction.

5. A stroboscopic camera apparatus as recited in claim 4, further comprising:
a light sensor for converting light reflected by the subject into a corresponding electric signal;
fifth means for detecting an amount of the light emitted by the light source in response to the electric signal generated by the light sensor;
sixth means for comparing the light amount detected by the fifth means with a predetermined reference light amount;
seventh means for varying the light emission time used by the second means in response to a result of the comparison by the sixth means; and
eighth means for detecting the end of the light emission time which is used by the third means in response to the result of the comparison by the sixth means.

6. A stroboscopic camera apparatus as recited in claim 4, wherein the third means comprises:
fifth means for detecting a distance between the apparatus and the subject;
sixth means for determining a desired light emission end voltage in response to the distance detected by the fifth means;
seventh means for detecting the light emission voltage applied to the light source by the second means;
eighth means for comparing the light emission voltage detected by the seventh means with the desired light emission end voltage determined by the sixth means;
ninth means for controlling the end of the light emission time in response to a result of the comparison by the eighth means; and
tenth means for using the desired light emission end voltage determined by the sixth means as the detected light emission voltage which occurs at the end of the light emission time.

7. A stroboscopic camera apparatus comprising:
an image sensor for converting an image of a subject into a corresponding electric signal;
first means for separating a color signal from the electric signal generated by the image sensor;
a light source for emitting light toward the subject;
second means for continuously applying a varying light emission voltage to the light source and continuously activating the light source by the light emission voltage during a variable light emission time;
third means for detecting a distance between the apparatus and the subject;
fourth means for determining a desired light emission end voltage in response to the distance detected by the third means;
fifth means for detecting the light emission voltage applied to the light source by the second means;
sixth means for comparing the light emission voltage detected by the fifth means with the desired light emission end voltage determined by the fourth means;
seventh means for controlling an end of the light emission time in response to a result of the comparison by the sixth means; and
eighth means for correcting the color signal separated by the first means in accordance with the desired light emission end voltage determined by the fourth means to implement white balance correction.

8. A stroboscopic camera apparatus comprising:
an image sensor for converting an image of a subject into a corresponding electric signal;
a color signal processing circuit for separating a color signal from the electric signal generated by the image sensor, and for correcting the separated color signal in response to a first control signal;
a sensor for detecting a condition of an exterior of the apparatus;
a light source for emitting light toward the subject;
a light source drive circuit for generating a drive voltage in response to a second control signal, and applying the generated drive voltage to the light source to drive the light source; and
a control circuit for generating the first control signal and and the second control signal in response to an output signal from the sensor, for outputting the first control signal to the color signal processing circuit, and for outputting the second control signal to the light source drive circuit.
